**Europäisches Patentamt**

**European Patent Office**

**Office européen des brevets**

(11) Numéro de publication: **0 491 584 B1**

(12)

# FASCICULE DE BREVET EUROPEEN

(45) Date de publication de fascicule du brevet: **30.11.94**  (51) Int. Cl.⁵: **C08F 4/606**, C08F 10/06

(21) Numéro de dépôt: **91403138.0**

(22) Date de dépôt: **20.11.91**

Le dossier contient des informations techniques présentées postérieurement au dépôt de la demande et ne figurant pas dans le présent fascicule.

(54) **Cocatalyseur de polymérisation du propylène à base de silane et de monoether.**

(30) Priorité: **27.11.90 FR 9014800**

(43) Date de publication de la demande:
**24.06.92 Bulletin 92/26**

(45) Mention de la délivrance du brevet:
**30.11.94 Bulletin 94/48**

(84) Etats contractants désignés:
**AT BE DE ES FR GB IT NL SE**

(56) Documents cités:
**EP-A- 0 349 772**
**EP-A- 0 373 999**
**EP-A- 0 385 765**
**DE-A- 3 633 131**

(73) Titulaire: **Société APPRYL**
**20, Rue Jean Jaurès**
**F-92807 Puteaux Cédex (FR)**

(72) Inventeur: **Duranel, Laurent**
**Ouartier Bergoué**
**F-64370 Arthez de Bearn (FR)**
Inventeur: **Spitz, Roger**
**44, Rue des Fleurs,**
**Serezin**
**F-69360 St Symphorien d'Ozon (FR)**
Inventeur: **Soto, Thierry**
**22, Rue du Lieutenant Colonel Girard**
**F-69007 Lyon (FR)**

(74) Mandataire: **Foiret, Claude et al**
**ELF ATOCHEM S.A.**
**Département Propriété Industrielle**
**La Défense 10 - Cedex 42**
**F-92091 Paris-La-Défense (FR)**

**Description**

La présente invention concerne un cocatalyseur utilisé en association avec une composante catalytique dans la polymérisation du propylène. Au cocatalyseur habituel à base de composé d'aluminium sont associés, en tant que donneurs d'électrons externes, un mélange d'au moins deux composés organiques dont l'un est un silane comportant deux liaisons Si-O-C et l'autre est un composé comportant une seule liaison C-O-C et/ou une seule liaison Si-O-C.

De façon connue le système catalytique du type Ziegler-Natta est constitué de deux éléments indissociables : une composante catalytique à base de métal de transition et un cocatalyseur généralement à base d'un composé d'aluminium. A la composante catalytique peut être ajouté entre autres éléments un donneur d'électrons.

Les EP 45976 et EP 45977 décrivent des systèmes catalytiques constitués d'une composante catalytique solide à base de Ti, Mg et Cl et un cocatalyseur formé d'un composé d'aluminium et d'un silane organique comportant au moins une liaison Si-O ou Si-N. La pratique montre que tous les silanes répondant à cette définition ne donnent pas les résultats industriels voulus. Par exemple avec certains de ces silanes la productivité catalytique ainsi que la stéréosélectivité sont faibles, voire très mauvaises.

Parmi la grande quantité de silanes non aromatiques connus, ceux comportant deux liaisons Si-O-C permettent d'obtenir de bons résultats, c'est-à-dire de conduire à une application industrielle de polypropylène à haute cristallinité ou à des copolymères de tenue mécanique élevée tels que les copolymères statistiques ou les copolymères à haute résistance aux chocs.

Le brevet japonais 61-23802 décrit également un catalyseur de polymérisation des oléfines constitué d'une composante catalytique (a) comprenant du chlorure de magnésium, un donneur d'électrons interne, un composé halogéné du titane, et, d'un cocatalyseur (b) comprenant un alkylaluminium, un ester carboxylique organique et un silane, ces deux derniers représentent des donneurs d'électrons externes.

Le brevet japonais 60-11924 décrit un catalyseur de polymérisation des oléfines comprenant d'une part une composante catalytique (a) contenant un composé du magnésium, un donneur d'électrons interne qui peut être un éther, un chlorosilane servant également de donneur d'électrons interne, un composé halogéné du titane et enfin un dernier donneur d'électrons interne sous forme d'ester carboxylique et d'autre part un cocatalyseur (b) constitué d'un alkylaluminium et d'un alkoxy-silane comme donneur d'électrons externe.

Le document EP-A-385 765 enseigne que des polyoléfines présentant une distribution de masses moléculaires large peut être obtenu en présence d'un système catalytique faisant intervenir deux donneurs d'électrons.

Le document EP -A-373 999 enseigne qu'un polyéthylène présentant une distribution de masses moléculaires étroite peut être obtenu en utilisant un système catalytique faisant intervenir un monoéther comme donneur d'électron externe.

Le document EP-A-349 772 décrit, pour la polymérisation du propylène, un système catalytique mettant en oeuvre deux composés présentant des liaisons Si - O - C. Le polypropylène ainsi obtenu présente une distribution de masses moléculaires étroite et une haute isotacticité.

L'avantage de l'introduction de silane comme donneur d'électrons externe dans les systèmes catalytiques Ziegler-Natta est d'augmenter l'activité et la productivité de ces systèmes. Par contre il existe un inconvénient d'ordre économique non négligeable, les silanes sont des produits onéreux.

L'objet de l'invention est une combinaison sélective de deux donneurs d'électrons choisis l'un dans la famille des monoéthers et/ou des silanes comportant une seule liaison Si-O-C, l'autre dans la famille des silanes non aromatiques comportant deux liaisons Si-O-C. Cette combinaison est prise comme donneur d'électrons externe en association avec un composé organique d'aluminium utilisé comme cocatalyseur et une composante catalytique dans le système catalytique de polymérisation du propylène.

Cette combinaison sélective permet de substituer une partie du silane comportant deux liaisons Si-O-C utilisé habituellement seul par un monoéther et/ou un silane comportant une seule liaison Si-O-C. La conséquence de cette subsitution est, tout en abaissant le prix du système catalytique, de conserver, sinon d'améliorer, les propriétés du système catalytique à base de silane en quantité donnée pour un résultat donné. En outre un tel mélange permet la diminution de la consommation de la composante catalytique solide pour une production donnée d'un atelier de polymérisation par effet d'augmentation de l'activité catalytique.

Les effets de cette combinaison sont inattendus pour différentes raisons. Une des principales raisons est que les monoéthers et les silanes, utilises individuellement ou en mélanges non sélectifs comme donneurs d'électrons externes dans les systèmes catalytiques pour la polymérisarion du propylène, provoquent des productivités en polymère plus faibles que lorsqu'ils sont combinés selon l'invention. Il est inexplicable que la synergie entre les composés de la sélection apporte une meilleure productivité du système catalytique que cette obtenue lorsqu'ils sont pris individuellement.

Une autre raison concerne l'indice d'heptane (HI). Cet indice définit la proportion de polymère insoluble dans l'heptane bouillant. Il est mesuré bar extraction de la fraction soluble par l'heptane bouillant pendant deux heures dans un appareil du type Kumagawa. La valeur du HI correspond, dans le cas de l'homopolymère, au pourcentage massique de polymère isotactique contenu dans le polymère brut. Il est connu, dans le cas de la polymérisation du propylène, que l'emploi de monoéther et/ou de silane comportant une seule liaison Si-O-C comme donneur d électrons externe entraîne la production de polymère de très mauvaise isotacticité avec un HI excessivement bas. Par contre, dans le cas où est utilisé un silane seul, lequel comporte deux liaisons Si-O-C, cet HI est correct. Dans ces conditions, lorsqu'on associe, en donneurs d'électrons externes, un monoéther et/ou un silane comportant une seule liaison Si-O-C et un silane non aromatique comportant deux liaisons Si-O-C, cet indice devrait chuter en conséquence ; or il est constaté au contraire que le HI reste sensiblement maintenu au niveau de celui obtenu sur un polymère pour lequel a été utilisé, dans le système catalyun polymère pour lequel a été utilisé, dans le système catalytique, uniquement du silane comportant deux liaisons Si-O-C comme donneur d'électrons externe.

Enfin l'indice de fluidité (melt index : MI) du polymère final augmente en fonction de le proportion de monoéther et/ou de silane à une fonction Si-O-C mis en oeuvre en tant que donneur d'électrons externe dans le système catalytique. Tout en étant supérieur à celui obtenu sur un polymère pour lequel le silane comportant deux liaisons Si-O-C a été utilisé seul comme donneur d'électrons externe dans le système catalytique, le MI reste dans les valeurs habituelles recommandées commercialement : de l'ordre de 1 à 40. Le MI est mesuré selon la norme ASTM D 1238 méthode L.

La conséquence de cette augmentation du MI se traduit, dans le cadre de la polymérisation par une diminution de la consommation d'hydrogène, utilisé généralement comme agent de transfert. Cet élément n'est pas négligeable sur le plan technologique et/ou économique.

Selon l'invention, le monoéther et/ou le silane aromatique comportant une seule liaison Si-O-C est associé au silane non aromatique comportant deux liaisons Si-O-C en pourcentages molaires respectifs de 80 à supérieur à 0 pour 20 à inférieure à 100. Bien qu'il soit possible d'utiliser moins de 5 % molaire de monoéther et/ou de silane comportant une liaison Si-O-C et que les effets du mélange avec le silane comportant deux liaisons Si-O-C soient encore sensibles sur la polymérisation et les polymères, l'intérêt économique n'est plus justifié, aussi est-il recommandé l'association molaire de 80 à 5 de monoéther et/ou de silane comportant une liaison Si-O-C pour 20 à 95 de silane comportant deux liaisons Si-O-C et plus particulièrement respectivement de 75 à 30 pour 25 à 70. L'association monoéther et/ou silane à une liaison Si-O-C avec un silane non aromatique comportant deux liaisons Si-O-C est mise en oeuvre comme donneur d'électrons externe dans les conditions et en quantités habituelles à l'emploi d'un donneur d'électrons externe. La quantité globale de l'association de monoéther et/ou de silane à une liaison Si-O-C et de silane à deux liaisons Si-O-C est définie par le rapport molaire monoéther et/ou silane à une liaison Si-O-C + silane à deux fonctions Si-O-C sur aluminium du cocatalyseur compris entre 0,2 et 0,005 et mieux entre 0,1 et 0,01.

Le monoéther utilisé selon l'invention peut être illustré par la formule R'OR'', R' et R'' étant des radicaux hydrocarbonés linéaires ou ramifiés, de préférence saturés, identiques ou différents, contenant de 1 à 12 atomes de carbone et de préférence de 1 à 6 atomes de carbone. Le monoéther peut également être cyclique, l'oxygène formant un cycle comportant au moins 4 atomes de carbone et 12 au plus ; il n'est pas exclu que certains atomes de carbone du cycle soient liés à des radicaux hydrocarbonés substituants, le nombre d'atomes de carbone total, dans ce cas, de l'éther cyclique ne dépassant pas 16. Dans la famille des monoéthers, on peut citer le diéthyléther, le di-n-propyléther, le diisopropyléther, le diisobutyléther, le diisoamyléther, le méthyléthyléther, le méthyl-, propyléther, le méthylisopropyléther, le méthyl-n butyléther, le méthylisobutyléther, le méthyltertiobutyléther, l'éthyl-n propyléther, l'éthylisopropyléther, l'éthyl-n butyléther, l'éthylisobutyléther, l'éthyltertiobutyléther, le tétrahydrofurane, le méthyl-2-tétrahydrofurane, le tétrahydropyranne, le méthyl-3 tétrahydropyranne, le di-n octyléther, le diphényléther, le diisooctyléther.

Le silane comportant une seule liaison Si-O-C utilisé selon l'invention peut être illustré par la formule

$R_1\ R_2\ R_3\ Si\text{-}O\text{-}R$

$R_1$, $R_2$, $R_3$ étant des radicaux hydrocarbonés linéaires ou ramifiés, saturés ou non, identiques ou différents, contenant de 1 à 12 atomes de carbone et R étant le radical méthyl ou éthyl.

Parmi ces silanes peuvent être cités : le triméthylméthoxysilane, le triméthylpropoxysilane, le triméthyl t-butoxysilane, le triméthyléthoxysilane, le diphénylméthyléthoxysilane, le diphénylvinyléthoxysilane, le diméthylvinyléthoxysilane, le triphénylméthoxysilane, le diphényl t-butylméthoxysilane.

Le silane non aromatique comportant deux liaisons Si-O-C utilisé selon l'invention peut être illustré par la formule

$R_1\ R_2\ Si(OR)_2$

$R_1$ et $R_2$ étant des radicaux hydrocarbonés linéaires ou ramifiés, saturés et ne comportant pas d'hétéroatome, identiques ou différents, contenant de 1 à 12 atomes de carbone, et, R étant le radical méthyl ou éthyl.

Parmi ces silanes peuvent être cités : le di-n-propyl-diméthoxysilane, le din-n-propyl-diéthoxysilane, le di-n-butyldiméthoxysilane, le di-n-butyl-diéthorysilane, le diisopropyl-diméthoxysilane, 1e di-isopropyl-diéthoxysilane, le diisoamylique-diméthoxysilane, le diisoamylique-diéthoxysilane, le diisooctyl-diméthoxysilane, le diisooctyl-diéthoxysilane, l'isopropylméthyl-diméthoxysilane, l'isopropylisobutyl-dimé-thoxysilane, l'isooctylméthyl-diméthorysilane, l'isohexylméthyl-diéthoxysilane, le cyclohexylméthyl-diméthoxysilane, le norbornylméthyl-diméthoxysilane.

En accord avec l'invention le monoéther et/ou le silane à une liaison Si-O-C et le silane à deux liaisons Si-O-C sont associés dans le système catalytique à la composante catalytique et au cocatalyseur en tant que donneurs d'électrons externes au plus tard au début de la réaction de polymérisation. En tout état de cause le monoéther ne doit pas être mis en contact avec la composante catalytique sans la présence du cocatalyseur dans le milieu. De façon préférentielle, sachant que généralement les donneurs d'électrons forment avec ce dernier un complexe d'association, il est recommandé, préalablement à la mise en contact du cocatalyseur avec la composante catalytique de former le complexe par mélange du cocatalyseur avec les donneurs d'électrons externes préalablement mélangés entre eux ou non.

Le cocatalyseur est maintenant connu de longue date. Il est habituellement choisi parmi les composés organoaluminiques tels que les aluminoxanes, les aluminosiloxanes, les composés comportant des liaisons Al-R-Al où R représente un groupement alkyl, ou, de formule $AlX_qR'_s$ dans laquelle X représente Cl ou OR' avec R' désignant un radical alkyle en $C_1$ à $C_{16}$ et de préférence $C_1$ à $C_{12}$ tandis que q et s sont des nombres tels que $1 < s < 3$, $0 < q < 2$ avec $q+s = 3$. A titre d'exemple on peut citer : $Al(C_2H_5)_3$, $Al(C_2H_5)_2Cl$, $Al(C_4H_9)_3$, $Al_2(C_2H_5)_3Cl_3$, $Al(C_6H_{13})_3$, $Al(C_8H_{17})_3$, $Al(C_2H_5)_2(OC_2H_5)$.

La composante catalytique est elle aussi connue en ellemême. Il s'agit de façon générale d'un composant solide comprenant au moins un composé du titane et un donneur d'électrons interne supportés sur un halogénure de magnésium, habituelle $MgCl_2$, sous forme active. Des exemples de telles composantes sont décrits dans le brevet britannique 1 559 194 et le brevet belge 868 682. Les composantes catalytiques utilisables selon l'invention peuvent contenir tout donneur d'électrons connu ; toutefois sont préférées les composantes catalytiques dans lesquelles le donneur d'électrons interne est un ester choisi dans les composés des groupes suivants :

- les mono et polyesters des acides polycarboxyliques insaturés dans lesquels deux groupements carboxy sont branchés à une double liaison en position vicinale et dans lesquels au moins un des radicaux $R_4$ hydrocarbonés des groupements $COOR_4$ est un radical ramifié saturé ou insaturé possédant de 3 à 20 atomes de carbone ou un radical aryl ou arylalkyl possédant de 6 à 20 atomes de carbone

- les mono et diesters des acides dicarboxyliques aromatiques ayant les groupements COOH en position ortho dans les-quels le radical hydrocarboné du groupement COOR contient de 1 à 20 atomes de carbone

- les mono et polyesters de composés hydroxylés aromatiques possédant au moins deux groupements hydroxyle en position ortho

- les esters des acides hydroxylés aromatiques dans lesquels au moins un groupement hydroxyle est en position ortho au groupement carboxyle

Parmi ces esters les composés préférés sont les esters des acides maléique, fumarique, benzoïque, méthacrylique et plus particulièrement phthalique.

La composante catalytique et le cocatalyseur sont associés pour la polymérisation du propylène dans des proportions telles que le rapport molaire d'aluminium contenu dans le cocatalyseur au titane de ladite composante se situe entre 0,5 et 2000 et de préférence entre 1 et 1000.

L'objet de l'invention s'applique à la polymérisation du propylène. Il est également entendu par polymérisation du propylène, la copolymérisation du propylène avec l'éthylène ou une alpha oléfine de $C_4$ à $C_{12}$ et plus particulièrement de $C_4$ à $C_6$ dans la mesure où le propylène représente au moins 75 % molaire de la totalité des monomères mis en oeuvre dans le cas des copolymères séquencés hautes teneurs.

La polymérisation ou la copolymérisation du propylène au moyen du système catalytique défini précédemment peut être mise en oeuvre, en solution ou en suspension dans un milieu liquide inerte et notamment dans un hydrocarbure aliphatique tel que le n-heptane, le n-hexane, l'isohexane, l'isobutane, ou encore en masse dans l'une au moins des oléfines à polymériser maintenue à l'état liquide ou hypercritique.

Les conditions opératoires, notamment températures, pressions, quantité de système catalytique, pour ces polymérisations en phase liquide sont celles qui sont habituellement proposées pour des cas similaires faisant appel à des systèmes catalytiques conventionnels de type Ziegler Natta.

Par exemple pour une polymérisation conduite en suspension ou en solution dans un milieu liquide inerte, on peut opérer à des températures allant jusqu'à 250°C et sous des pressions allant de la pression atmosphérique à 250 bars. Dans le cas d'une polymérisation en milieu propylène liquide, les températures peuvent aller jusqu'à la température critique et les pressions peuvent être comprises entre la pression atmosphérique et la pression critique.

Le système catalytique obtenu par association de la composante catalytique, du composé organique d'aluminium et de la combinaison sélective de donneur d'électrons externe telle que définie plus haut, peut être encore utilisé pour la polymérisation en phase gazeuse du propylène ou de ses mélanges avec au moins une des autres oléfines qui viennent d'être citées. En particulier on peut polymériser en phase gazeuse, au contact dudit système catalytique, un mélange de propylène et d'une ou plusieurs oléfines en $C_2$ à $C_{12}$ telles que éthylène, butène-1, hexène-1, méthyl-4 pentène-1 et octène-1, renfermant, lorsqu'il est au contact du système catalytique, une proportion molaire de comonomères en $C_2$ à $C_{12}$ comprise entre 0,1 et 25 %, et de préférence entre 1 et 20 %.

La polymérisation en phase gazeuse de l'oléfine ou des oléfines au contact du système catalytique peut être effectuée dans tout réacteur permettant une polymérisation en phase gazeuse et en particulier dans un réacteur à lit agité et/ou à lit fluidisé. Les conditions de mise en oeuvre de la polymérisation en phase gazeuse, notamment température, pression, injection de l'oléfine ou des oléfines dans le réacteur à lit agité et/ou à lit fluidisé, contrôle de la température et de la pression de polymérisation, sont analogues à celles proposées dans l'art antérieur pour la polymérisation en phase gazeuse des oléfines. On opère généralement à une températue inférieure au point de fusion Tf du polymère ou copolymère à synthétiser, et plus particulièrement comprise entre +20°C et (Tf -5)°C, et sous une pression telle que l'oléfine ou les oléfines, et éventuellement les autres monomères hydrocarbonés présents dans le réacteur soient essentiellement en phase vapeur.

La polymérisation en solution, en suspension, en masse, ou en phase gazeuse peut être réalisée en présence d'un agent de transfert de chaînes, de manière à contrôler l'indice de fusion du polymère ou copolymère à produire. L'agent de transfert de chaînes préféré est l'hydrogène, que l'on utilise en quantité pouvant aller jusqu'à 90 %, et se situant de préférence entre 0,1 et 60 % du volume de l'ensemble oléfines et hydrogène amené au réacteur.

Le système catalytique peut également être utilisé pour la préparation d'un prépolymère actif. Ledit prépolymère actif est obtenu en mettant en contact le propylène ou un de ses mélanges tels que précédemment cités avec le système catalytique en proportions telles que la ou les oléfines représentent 2 à 500 grammes et de préférence 2 à 200 grammes par gramme de la composante catalytique du système catalytique.

Les exemples suivants illustrent l'invention sans toutefois la limiter.


EXEMPLE


Dans un réacteur en acier inoxydable de 8 litres, purgé à l'azote, on introduit 2,5 Nl d'hydrogène et 6 litres de propylène liquide.

A 20 ml d'une solution de triethylaluminium (TEA) dans l'heptane à la concentration de 3 moles/litre on ajoute un mélange silane à deux fonctions Si-O-C ($E_1$)-monoéther ou silane à une seule fonction Si-O-C ($E_2$) dans le rapport molaire TEA/($E_1$ + $E_2$) désiré. Le mélange ainsi préparé est laissé 10 minutes à température ambiante sous agitation. Il est ensuite injecté dans le réacteur. On laisse en contact 10 minutes, à température ambiante, sous agitation.

70 mg d'une composante catalytique comportant du Mg, Cl, Ti et du dibutylphtalate obtenue de façon connue par imprégnation du dibutylphtalate puis de $TiCl_4$ sur du chlorure de magnésium activé par broyage, les pourcentages en poids de Ti, Mg et Cl étant respectivement de 3,16 et 56 %, sont injectés dans le réacteur sous forme de suspension dans 10 ml d'heptane.

La température est portée à 70°C en 10 minutes et on laisse la réaction se dérouler pendant 1 heure. La température est ensuite abaissée à l'ambiante tout en dégazant le réacteur.

Les conditions manquantes et les résultats obtenus sont donnés dans le tableau suivant, les essais 16 à 25 et 32 à 34 étant donnés à titre comparatif.

EP 0 491 584 B1

| Essai | E1 | E2 | % E2 molaire | $\dfrac{Al}{E_1 + E_2}$ | P | HI | MI |
|---|---|---|---|---|---|---|---|
| 1 | CMDMS | DEE | 50 | 20 | 26.000 | 96.5 | 8.0 |
| 2 | CMDMS | DEE | 70 | 20 | 24.100 | 96.2 | 11.0 |
| 3 | CMDMS | EDIA | 70 | 20 | 17.600 | 96.2 | 14.0 |
| 4 | CMDMS | ETBE | 70 | 20 | 25.000 | 96.5 | 8.8 |
| 5 | CMDMS | MTBE | 50 | 10 | 27.400 | 97.5 | 6.2 |
| 6 | CMDMS | MTBE | 70 | 10 | 25.400 | 96.8 | 7.4 |
| 7 | CMDMS | MTBE | 80 | 10 | 23.800 | 95.0 | 10 |
| 8 | CMDMS | MTBE | 30 | 10 | 22.700 | 97.6 | 5 |
| 9 | DBDMS | DEE | 50 | 10 | 23.500 | 96.8 | 7 |
| 10 | DBDMS | MTBE | 30 | 10 | 21.800 | 97.0 | 6 |
| 11 | DBDMS | MTBE | 50 | 10 | 25.490 | 97.1 | 7.5 |
| 12 | CMDMS | THF | 70 | 10 | 19.630 | 96.5 | 8.0 |
| 13 | CMDMS | MTBE | 70 | 30 | 19.020 | 93.5 | 8.0 |
| 14 | CMDMS | MTBE | 70 | 60 | 18.860 | 91.8 | 9.6 |
| 15 | CMDMS | MTBE | 70 | 5 | 19.280 | 97.0 | 5.4 |
| 16 | CMDMS | – | 0 | 5 | 15.200 | 97.7 | 3.5 |
| 17 | CMDMS | – | 0 | 10 | 17.600 | 97.0 | 4 |
| 18 | CMDMS | – | 0 | 30 | 20.100 | 96.4 | 4 |
| 19 | CMDMS | – | 0 | 60 | 18.700 | 95.7 | 4 |
| 20 | DBDMS | – | 0 | 10 | 18.000 | 97.1 | 5 |
| 21 | – | DEE | 100 | 10 | 17.500 | 73.0 | 28 |

| Essai | E1 | E2 | % E2 molaire | Al / (E1 + E2) | P | HI | MI |
|---|---|---|---|---|---|---|---|
| 22 | - | THF | 100 | 10 | 14.300 | 65.0 | 45 |
| 23 | - | EDIA | 100 | 10 | 15.200 | 70.0 | 53 |
| 24 | - | MTBE | 100 | 10 | 18.700 | 68.6 | 73 |
| 25 | - | ETBE | 100 | 10 | 16.000 | 72.0 | 65 |
| 26 | CMDMS | DPMMS | 30 | 10 | 23.000 | 96.5 | 7 |
| 27 | CMDMS | DPMMS | 70 | 10 | 22.000 | 95.7 | 9 |
| 28 | DBDMS | DPMMS | 30 | 10 | 22.700 | 96.8 | 6 |
| 29 | CMDMS | TMMS | 30 | 20 | 21.800 | 96.3 | 6 |
| 30 | CMDMS | TMMS | 70 | 20 | 22.400 | 95.9 | 8 |
| 31 | CMDMS | TMES | 70 | 20 | 21.000 | 96.0 | 5 |
| 32 | - | DPMMS | 100 | 10 | 17.000 | 72.0 | 15 |
| 33 | - | TMMS | 100 | 20 | 16.500 | 66.0 | 20 |
| 34 | - | TMES | 100 | 20 | 18.000 | 70.0 | 17 |

CMDMS = cyclohexylméthyldiméthoxysilane  
DEE = diéthyléther  
THF = tétrahydrofurane  
ETBE = éthyltertiobutyléther  
TMMS = triméthylméthoxysilane  
P = productivité en grammes de polymère par gramme de catalyseur

DBDMS = diisobutyldiméthoxysilane  
EDIA = étherdiisoamylique  
MTBE = méthyltertiobutyléther  
DPMMS = diphénylméthyldiméthoxysilane  
TMES = triméthyléthoxysilane

## Revendications

1. Cocatalyseur à base de composé organique d'aluminium et de donneur d'électrons externe utilisé, dans le système catalytique pour la polymérisation du propylène ou sa copolymérisation avec l'éthylène ou une alpha oléfine de $C_4$ à $C_{12}$, en association avec une composante catalytique comprenant au moins un composé du titane et un donneur d'électrons interne supportés sur un halogénure de magnésium caractérisé en ce que le donneur d'électrons externe est constitué de l'association d'un silane non aromatique comportant deux liaisons Si-O-C et d'un monoéther et/ou d'un silane comportant une seule liaison Si-O-C.

2. Cocatalyseur selon la revendication 1 caractérisé en ce que le monoéther et/ou le silane comportant une seule liaison Si-O-C sont associés au silane comportant deux liaisons Si-O-C dans les pourcentages molaires de 80 à 5 de monoéther et/ou de silane comportant une seule liaison Si-O-C pour 20 à 95 de silane comportant deux liaisons Si-O-C.

3. Cocatalyseur selon l'une des revendications 1 ou 2 caractérisé en ce que le rapport molaire monoéther et/ou silane comportant une seule liaison Si-O-C + silane comportant deux liaisons Si-O-C sur l'aluminium du cocatalyseur est compris entre 0,2 et 0,005.

4. Cocatalyseur selon l'une des revendications 1 à 3 caractérisé en ce que le monoéther est choisi parmi les produits de formule R'OR'' R' et R'' étant des radicaux hydrocarbonés linéaires ou ramifiés, identiques ou différents contenant de 1 à 10 atomes de carbone, ou encore des radicaux cycliques, l'oxygène formant un cycle comportant au moins 4 atomes de carbone et 12 au plus.

5. Cocatalyseur selon l'une des revendications 1 à 4 caractérisé en ce que le silane comportant une seule liaison Si-O-C est choisi parmi les composés de formule $R_1$ $R_2$ $R_3$ Si-O-R dans laquelle $R_1$, $R_2$, $R_3$ sont des radicaux hydrocarbonés linéaires ou ramifiés, saturés ou non, identiques ou différents, contenant de 1 à 12 atomes de carbone et R est un radical méthyl ou éthyl.

6. Cocatalyseur selon l'une des revendications 1 à 5 caractérisé en ce que le silane comportant deux liaisons Si-O-C est choisi parmi les composés de formule $R_1$ $R_2$ $Si(OR)_2$ dans laquelle $R_1$ et $R_2$ sont des radicaux hydrocarbonés linéaires ou ramifiés, saturés et ne comportant pas d'hétéroatome, identiques ou différents, contenant de 1 à 12 atomes de carbone et R est un radical méthyl ou éthyl.

7. Cocatalyseur selon l'une des revendications 1 à 6 caractérisé en ce qu'il est associé à une composante catalytique comprenant un ester en tant que donneur d'électrons interne.

**Claims**

1. Cocatalyst based on an organic compound of aluminium and an external electron-donor, employed in the catalyst system for the polymerization of propylene or its copolymerization with ethylene or a $C_4$-$C_{12}$ alphaolefin, in combination with a catalyst component including at least one titanium compound and an internal electron-donor which are supported on a magnesium halide, characterized in that the external electron-donor consists of the combination of a nonaromatic silane containing two Si-O-C bonds and of a monoether and/or of a silane containing a single Si-O-C bond.

2. Cocatalyst according to Claim 1, characterized in that the monoether and/or the silane containing a single Si-O-C bond are used in combination with the silane containing two Si-O-C bonds in molar percentages of 80 to 5 of monoether and/or of silane containing a single Si-O-C bond per 20 to 95 of silane containing two Si-O-C bonds.

3. Cocatalyst according to either of Claims 1 and 2, characterized in that the molar ratio of monoether and/or silane containing a single Si-O-C bond + silane containing two Si-O-C bonds to the aluminium of the cocatalyst is between 0.2 and 0.005.

4. Cocatalyst according to one of Claims 1 to 3, characterized in that the monoether is chosen from the products of formula R'OR'', R' and R'' being identical or different linear or branched hydrocarbon radicals containing from 1 to 10 carbon atoms, or else cyclic radicals, the oxygen forming a ring containing at least 4 and not more than 12 carbon atoms.

5. Cocatalyst according to one of Claims 1 to 4, characterized in that the silane containing a single Si-O-C bond is chosen from the compounds of formula $R_1R_2R_3Si$-O-R in which $R_1$, $R_2$ and $R_3$ are identical or

different, saturated or unsaturated, linear or branched hydrocarbon radicals containing from 1 to 12 carbon atoms, and R is a methyl or ethyl radical.

6. Cocatalyst according to one of Claims 1 to 5, characterized in that the silane containing two Si-O-C bonds is chosen from the compounds of formula $R_1 R_2 Si(OR)_2$ in which $R_1$ and $R_2$ are identical or different saturated, linear or branched hydrocarbon radicals containing from 1 to 12 carbon atoms and not containing any heteroatom, and R is a methyl or ethyl radical.

7. Cocatalyst according to one of Claims 1 to 6, characterized in that it is used in combination with a catalyst component including an ester as an internal electron-donor.

**Patentansprüche**

1. Cokatalysator auf der Basis einer organischen Aluminiumverbindung und eines externen Elektronendonators, der zusammen mit einer katalytischen Zusammensetzung aus mindestens einer Titanverbindung und einem inneren Elektronendonator auf einem magnesiumhalogenidhaltigen Trägermaterial in dem katalytischen System für die Polymerisation von Propylen oder dessen Copolymerisation mit Ethylen oder mit einem $C_4$ bis $C_{12}$-$\alpha$-Olefin verwendet wird, dadurch gekennzeichnet, daß der externe Elektronendonator aus der Verbindung eines nicht-aromatischen Silans und zwei Si-O-C-Bindungen mit einem Monoether und/oder einem Silan und nur einer Si-O-C-Bindung besteht.

2. Cokatalysator nach Anspruch 1, dadurch gekennzeichnet, daß der Monoether und/oder das nur eine einzige Si-O-C-Bindung enthaltende Silan mit dem zwei Si-O-C-Bindungen enthaltenden Silan in einem molaren Prozentsatz von 80 bis 5 Molprozent Monoether und/oder dem eine einzige Si-O-C-Bindung enthaltenden Silan auf 20 bis 95 Molprozent des zwei Si-O-C-Bindungen enthaltenden Silans, verbunden sind.

3. Cokatalysator nach einem der Ansprüche 1 oder 2, dadurch gekennzeichnet, daß das Verhältnis des Monoethers und/oder des nur eine Si-O-C-Bindung enthaltenden Silans und des zwei Si-O-C-Bindungen enthaltenden Silans zu dem Aluminium des Cokatalysators zwischen 0,2 und 0,005 beträgt.

4. Cokatalysator nach einem der Ansprüche 1 bis 3, dadurch gekennzeichnet, daß der Monoether aus den Produkten der Formel R'OR'' ausgewählt ist, wobei R' und R'' gleiche oder verschiedene, geradkettige oder verzweigte Kohlenwasserstoffreste mit 1 bis 10 Kohlenstoffatomen oder cyclische Reste sind, wobei der Sauerstoff einen Ring aus mindestens 4 und höchstens 12 Kohlenstoffatomen bildet.

5. Cokatalysator nach einem der Ansprüche 1 bis 4, dadurch gekennzeichnet, daß das nur eine Si-O-C-Bindung enthaltende Silan aus den Verbindungen der Formel $R_1 R_2 R_3 Si$-O-R ausgewählt ist, in der $R_1$, $R_2$ und $R_3$ gleiche oder verschiedene, geradkettige oder verzweigte, gesättigte oder ungesättigte Kohlenwasserstoffreste mit 1 bis 12 Kohlenstoffatomen sind, und R ein Methyl- oder Ethylrest ist.

6. Cokatalysator nach einem der Ansprüche 1 bis 5, dadurch gekennzeichnet, daß das zwei Si-O-C-Bindungen enthaltende Silan aus den Verbindungen der Formel $R_1 R_2 Si(OR)_2$ ausgewählt ist, in der $R_1$ und $R_2$ gleiche oder verschiedene, gesättigte, geradkettige oder verzweigte Kohlenwasserstoffreste mit 1 bis 12 Kohlenstoffatomen sind, die keine Heteroatome enthalten, und R ein Methyl- oder Ethylrest ist.

7. Cokatalysator nach einem der Ansprüche 1 bis 6, dadurch gekennzeichnet, daß er mit einer katalytischen Zusammensetzung verbunden ist, die als inneren Elektronendonator einen Ester enthält.